# FASCICULE DE BREVET EUROPEEN

(11) **EP 3 797 045 B1**
(45) Date de publication et mention de la délivrance du brevet: **21.02.2024**
(21) Numéro de dépôt: 19791300.7
(22) Date de dépôt: 16.04.2019
(51) Int. Cl.: B60K 6/448, B60K 6/52, B60K 17/356, B60W 20/15, B60W 10/08, B60W 10/30, B60W 30/184, B60W 10/02, B60L 3/00, B60K 6/387

(54) **PROCÉDÉ DE CONTRÔLE D'UNE TEMPÉRATURE D'UN CONVERTISSEUR D'UN VÉHICULE AUTOMOBILE**
VERFAHREN ZUR REGELUNG DER TEMPERATUR EINES KONVERTERS BEI EINEM KRAFTFAHRZEUG
METHOD FOR CONTROLLING A TEMPERATURE OF A CONVERTER IN A MOTOR VEHICLE

(30) Priorité: 22.05.2018 FR 1854216
(43) Date de publication de la demande: 31.03.2021
(73) Titulaire: Stellantis Auto SAS, 78300 Poissy (FR)
(72) Inventeur: MILHAU, Yohan, 78630 Orgeval (FR); HABBANI, Ridouane, 92600 Asnieres Sur Seine (FR)
(86) Numéro de dépôt international: PCT/FR2019/050904
(87) Numéro de publication internationale: WO 2019/224439

(56) Documents cités:
- EP-A1- 3 037 296
- EP-A1- 3 235 670
- DE-T5-112012 002 016
- JP-A- 2012 075 228

## Description

L'invention a trait à l'alimentation d'un réseau électrique alimentant au moins un organe de sécurité d'un véhicule automobile, et plus particulièrement aux performances d'un convertisseur alimentant ledit réseau électrique.

Les véhicules automobiles comprennent de multiples organes de sécurité tels que le système d'éclairage mais également l'aide au freinage, l'aide à la traction ou encore les différents calculateurs contrôlant ses systèmes et aides.

L'alimentation en énergie électrique de ces organes de sécurité est essentielle pour assurer un bon fonctionnement du véhicule automobile mais surtout pour réduire les risques d'accidents ou de dommages corporels lors d'un accident.

Le document JP2012075228A décrit un véhicule automobile comprenant un moteur thermique, une machine électrique connectée à un premier onduleur, un générateur connecté à un deuxième onduleur, un convertisseur et un système de refroidissement assurant le refroidissement du premier onduleur, du deuxième onduleur et du convertisseur. Afin de réduire le nombre de capteurs de température et d'éviter l'endommagement du convertisseur, lorsque la valeur courante de la température du premier onduleur dépasse une valeur seuil, la sollicitation de la machine électrique est réduite, la sollicitation du générateur est augmentée et le moteur thermique compense une diminution du couple fourni par la machine électrique.

Dans un tel procédé le système de refroidissement peut ne pas être assez puissant pour refroidir à la fois le deuxième onduleur et le convertisseur amoindrissant ainsi les performances du convertisseur, en ne le refroidissant pas assez, réduisant l'alimentation en énergie électrique d'un réseau électrique connecté au convertisseur.

L'objectif est de proposer un procédé assurant un meilleur refroidissement du convertisseur et ainsi une meilleure alimentation en énergie électrique d'un réseau électrique du véhicule automobile.

A cet effet, il est proposé, en premier lieu, un procédé de contrôle d'une température d'un convertisseur de puissance d'un véhicule automobile, le convertisseur connectant un réseau électrique et un premier onduleur d'une motorisation électrique du véhicule automobile, la motorisation électrique étant couplée, par le biais d'un premier dispositif de couplage, à au moins une des roues du véhicule automobile de sorte à mouvoir le véhicule automobile, le véhicule automobile comprenant un système de refroidissement d'une pluralité d'éléments parmi lesquels le convertisseur et le premier onduleur, le procédé de contrôle comprenant une comparaison d'une valeur courante d'une température d'un des éléments de la pluralité d'éléments refroidis par le système de refroidissement avec une valeur seuil, et, lorsque la valeur courante de la température est supérieure à la valeur seuil, une diminution d'un travail de la motorisation électrique mouvant le véhicule automobile compensée par un travail d'une deuxième motorisation mouvant le véhicule automobile, la compensation de la diminution de travail comprenant un couplage forcé d'un deuxième dispositif de couplage de la deuxième motorisation à au moins une des roues du véhicule automobile.

Ce procédé de contrôle assure ainsi la transmission aux roues du véhicule automobile d'un couple correspondant à la volonté du conducteur tout en réduisant la sollicitation du système de refroidissement par les éléments refroidis par ce dernier, à l'exception du convertisseur, afin d'assurer le refroidissement du convertisseur de sorte à ne pas porter atteinte aux performances du convertisseur et à maintenir un fonctionnement du véhicule automobile de sorte à réduire les risques d'accidents ou de dommages corporels lors d'un accident.

Diverses caractéristiques supplémentaires peuvent être prévues, seules ou en combinaison :
- la température relevée est celle du convertisseur de sorte à maintenir le convertisseur à une température de fonctionnement acceptable ;
- lors de la diminution du travail de la motorisation électrique, la motorisation électrique est découplée de ladite au moins une des roues du véhicule automobile de sorte que le système de refroidissement n'assure plus que le refroidissement du convertisseur ;
- la valeur seuil est segmentée en :
   - une valeur seuil d'augmentation, à partir de laquelle, lorsque la valeur courante de la température relevée augmente, le couplage du deuxième dispositif de couplage de la deuxième motorisation à ladite au moins une des roues du véhicule automobile est forcée,
   - une valeur seuil de diminution, inférieure à la valeur seuil d'augmentation, à partir de laquelle, lorsque la valeur courante de la température relevée diminue, le forçage du couplage du deuxième dispositif de couplage de la deuxième motorisation à ladite au moins une des roues du véhicule automobile est interrompu,
   empêchant ainsi une commutation intempestive entre le couplage forcé et l'arrêt du couplage forcé de la deuxième motorisation avec ladite au moins une roue pouvant survenir dans le cas où la valeur seuil de la température ne serait pas segmentée et que la valeur courante de la température du convertisseur serait sensiblement égale à la valeur seuil ;
- lorsque la valeur courante de la température augmente, le pourcentage du travail imposé à la deuxième motorisation, par rapport à un travail maximal réalisable par cette deuxième motorisation, augmente progressivement de sorte à concentrer l'efficacité du système de refroidissement sur le convertisseur en fonction de la température du convertisseur ;
- lorsque la valeur courante de la température diminue, le pourcentage du travail imposé à la deuxième motorisation, par rapport à un travail maximal réalisable par cette deuxième motorisation, diminue progressivement de sorte à augmenter le couple fourni par la motorisation électrique en fonction de la température du convertisseur ;
- avant que la valeur courante de la température n'atteigne un maximum, lorsque la valeur courante de la température augmente, le pourcentage du travail imposé à la deuxième motorisation, par rapport à un travail maximal réalisable par cette deuxième motorisation, atteint un palier qui persiste après une diminution de la valeur courante de la température depuis le maximum assurant une stabilité dans le travail fourni par la deuxième motorisation ;

II est proposé, en second lieu, un véhicule automobile comprenant :
- un convertisseur ;
- un réseau électrique connecté au convertisseur ;
- une motorisation électrique munie d'un premier onduleur, le premier onduleur étant connecté au réseau électrique par le biais du convertisseur ;
- un système de refroidissement d'une pluralité d'éléments parmi lesquels le convertisseur et le premier onduleur ;
- un capteur de température d'un des éléments de la pluralité d'éléments refroidis par le système de refroidissement ;
- un premier dispositif de couplage d'au moins une des roues du véhicule automobile et de la motorisation électrique ;
- une deuxième motorisation ;
- un deuxième dispositif de couplage d'au moins une des roues du véhicule automobile et de la deuxième motorisation ;
le véhicule automobile comportant un moyen de mise en oeuvre d'un procédé de contrôle tel que précédemment décrit.

En variante :
- la deuxième motorisation comprend une deuxième machine électrique ;
- la deuxième motorisation comprend un moteur thermique.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une représentation d'un véhicule automobile schématisant l'alimentation, par un convertisseur, d'un réseau électrique connecté à des organes de sécurité du véhicule automobile ;
- la figure 2 est une représentation schématique d'étapes d'un procédé d'alimentation du réseau électrique ;
- la figure 3 est un graphique représentant un couplage forcé d'un dispositif de couplage d'une deuxième motorisation avec au moins une roue du véhicule automobile en fonction de la température du convertisseur ;
- la figure 4 est un graphique représentant l'évolution d'un travail imposé à la deuxième motorisation en fonction de la température du convertisseur.

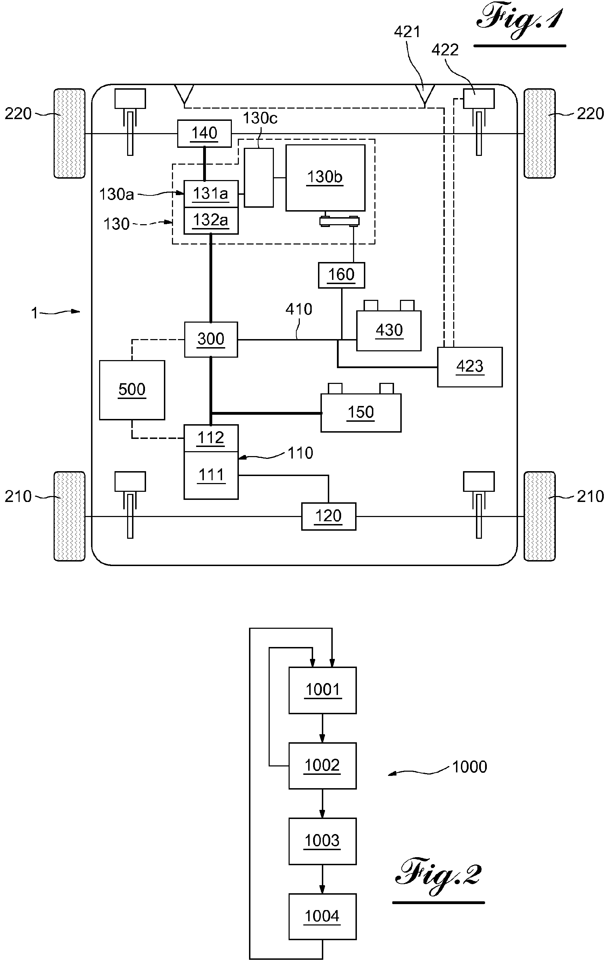

La figure 1 représente un véhicule 1 automobile comprenant une motorisation 110 électrique et un premier dispositif 120 de couplage de la motorisation 110 électrique à au moins une des roues 210 arrière du véhicule 1 automobile.

Selon des modes de réalisation, le premier dispositif 120 de couplage est un embrayage, un crabot, un convertisseur de couple ou encore un système hydraulique

Le véhicule 1 automobile comprend une deuxième motorisation 130 et un deuxième dispositif 140 de couplage de la deuxième motorisation 130 à au moins une des roues 220 avant du véhicule 1 automobile.

Dans un mode de réalisation différent, la motorisation 110 électrique est apte à être couplée à au moins une des roues 220 avant et la deuxième motorisation 130 est apte à être couplée à au moins une des roues 210 arrière. En variante, la motorisation 110 électrique et la deuxième motorisation 130 sont aptes à être couplée à au moins une même roue 210,220.

Le véhicule 1 automobile comprend également un convertisseur 300 connectant la motorisation 110 électrique et un réseau 410 électrique alimentant des organes de sécurité du véhicule 1 automobile.

Les organes de sécurité sont, par exemple, un système 421 d'éclairage, un système 422 d'aide au freinage ou encore différents calculateurs 423 contrôlant ces système et aide.

Selon le mode de réalisation représenté, la motorisation 110 électrique comprend une première machine 111 électrique apte à être couplée, par le biais du premier dispositif 120 de couplage, à ladite au moins une roue 210 arrière et un premier onduleur 112 connectant la motorisation 110 électrique au convertisseur 300.

Le convertisseur 300 est apte à assurer l'alimentation, en énergie électrique, du réseau 410 électrique depuis la motorisation 110 électrique ou depuis une batterie 150 de traction connectée au convertisseur 300 et au premier onduleur 112 de la motorisation 110 électrique.

Selon le mode de réalisation représenté, la batterie 150 de traction est apte à être rechargée par le biais de la motorisation 110 électrique et/ou par le biais d'une alimentation externe au véhicule 1 automobile. La batterie 150 de traction est apte à alimenter la motorisation 110 électrique.

Le véhicule 1 automobile comprend un système 500 de refroidissement commun au premier onduleur 112 et au convertisseur 300. Le système 500 de refroidissement permet de réduire les coûts de fabrication et d'assemblage du véhicule 1 automobile ainsi que de réduire l'espace occupé par les différents éléments constitutifs du véhicule 1 automobile tout en assurant un fonctionnement satisfaisant dans une majorité de situations.

Le véhicule 1 comprend également un capteur de température T du convertisseur 300 (non représenté).

Dans des modes de réalisation différents, le capteur de température T est configuré pour relever la température du premier onduleur 112. Le premier onduleur 112, relié au système 500 de refroidissement, réduit d'autant les capacités du système 500 de refroidissement à refroidir le convertisseur 300.

Dans le mode de réalisation illustré, le réseau 410 électrique est connecté à une batterie 430 de bord palliant un défaut d'alimentation momentané, du réseau 410 électrique, par le convertisseur 300. Cependant, la batterie 430 de bord ne peut assurer une coupure ou une baisse de l'alimentation pendant un long moment.

Lors d'une forte sollicitation de la motorisation 110 électrique, le système 500 de refroidissement atteint ses limites et ne parvient pas à refroidir correctement, à la fois, le premier onduleur 112 de la motorisation 110 électrique et le convertisseur 300. Le réseau 410 électrique risque ainsi de subir des coupures dans son alimentation.

Afin d'améliorer la pérennité de l'alimentation, en énergie électrique, du réseau 410 électrique, un procédé 1000 de contrôle de la température T du convertisseur 300, représenté sur la figure 2, comprend :
- une étape 1001 de relève de la température T du convertisseur 300 ;
- une étape 1002 de comparaison d'une valeur Tc courante de ladite température T relevée avec une valeur T₁,T₂ seuil ;
lorsque la valeur Tc courante est supérieure, ou supérieure ou égale, à la valeur T₁,T₂ seuil,
- une étape 1003 de diminution d'un travail de la motorisation 110 électrique mouvant le véhicule 1 automobile ;
- une étape 1004 de compensation de la diminution du travail de la motorisation 110 électrique par un travail W de la deuxième motorisation 130 mouvant le véhicule 1 automobile, l'étape 1004 de compensation de la diminution de travail comprenant un couplage F_{F} forcé du dispositif 140 de couplage de la deuxième motorisation 130 à ladite au moins une roue 220 avant du véhicule 1 automobile.

Le terme couplage désigne ici une liaison entre une motorisation et une roue du véhicule 1 automobile grâce à laquelle ladite motorisation est apte à mettre en mouvement, par le biais de la roue, le véhicule 1 automobile.

Le procédé 1000 de contrôle impose ainsi le couplage de la deuxième motorisation 130 à ladite au moins une roue 220 avant même si ce couplage n'est pas réalisé préalablement.

Par dispositif 140 de couplage est entendu tout dispositif permettant la transmission d'un travail délivré par la deuxième motorisation 130 à ladite au moins une roue 220 avant.

Selon des modes de réalisation, le deuxième dispositif 140 de couplage est un embrayage, un crabot, un convertisseur de couple ou encore un système hydraulique.

Dans le mode de réalisation représenté, le procédé 1000 de contrôle est réalisé en boucle, à intervalle régulier.

Ce procédé 1000 de contrôle assure la transmission aux roues 210,220 du véhicule 1 automobile d'un couple correspondant à la volonté du conducteur tout en réduisant la sollicitation du système 500 de refroidissement par le premier onduleur 112 afin d'assurer le bon refroidissement du convertisseur 300 de sorte à ne pas porter atteinte aux performances du convertisseur 300 et à maintenir un bon fonctionnement du véhicule 1 automobile de sorte à réduire les risques d'accidents ou de dommages corporels lors d'un accident.

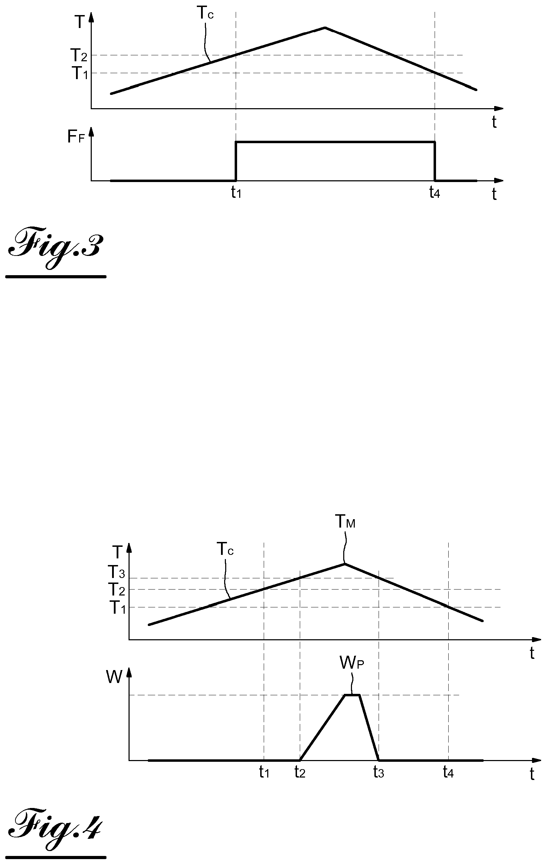

La figure 3 représente le couplage F_{F} forcé du dispositif 140 de couplage de la deuxième motorisation 130 avec la au moins une roue 220 avant en fonction du temps t (graphique inférieur) évoluant par rapport à la valeur Tc courante de la température T du convertisseur 300 qui augmente puis diminue en fonction du temps t (graphique supérieur).

Comme on peut le voir sur les figures 3 et 4, dans le mode de réalisation représenté, la valeur T₁,T₂ seuil est segmentée en une valeur T₂ seuil d'augmentation et une valeur T₁ seuil de diminution. La valeur T₂ seuil d'augmentation est supérieure à la valeur T₁ seuil de diminution.

Lorsque la valeur Tc courante de la température T du convertisseur 300 augmente, le couplage F_{F} forcé du dispositif 140 de couplage de la deuxième motorisation 130 avec ladite au moins une roue 220 avant est réalisée, à un premier temps t₁, lorsque la valeur Tc courante est supérieure, ou supérieure ou égale, à la valeur T₂ seuil d'augmentation.

Lorsque la valeur Tc courante de la température T du convertisseur 300 diminue, l'arrêt du couplage F_{F} forcé du dispositif 140 de couplage de la deuxième motorisation 130 avec ladite au moins une roue 210 arrière est réalisé, à quatrième temps t₄, lorsque la valeur Tc courante est inférieure, ou inférieure ou égale, à la valeur T₁ seuil de diminution.

La valeur T₂ seuil d'augmentation et la valeur T₁ seuil de diminution, étant différentes, empêchent ainsi une commutation intempestive entre le couplage F_{F} forcé et l'arrêt du couplage F_{F} forcé de la deuxième motorisation 130 avec ladite au moins une roue 220 avant pouvant survenir dans le cas où la valeur T₁,T₂ seuil de la température T ne serait pas segmentée et que la valeur Tc courante de la température T du convertisseur 300 serait sensiblement égale à la valeur T₁,T₂ seuil.

La figure 4 représente le pourcentage d'un travail W imposé à la deuxième motorisation 130, par rapport au travail maximal réalisable par cette deuxième motorisation 130, en fonction du temps t (graphique inférieur) évoluant par rapport à la valeur Tc courante de la température T du convertisseur 300 qui augmente puis diminue en fonction du temps t (graphique supérieur).

Au-dessus d'une valeur T₃ haute, supérieure à la valeur T₂ seuil d'augmentation, le pourcentage du travail W imposé à la deuxième motorisation 130, par rapport au travail maximal réalisable par cette deuxième motorisation 130, augmente progressivement, à partir d'un deuxième temps t₂, lorsque la valeur Tc courante de la température T augmente. Cette augmentation est, selon le mode de réalisation illustré, linéaire.

Le pourcentage du travail W imposé à la deuxième motorisation 130 diminue progressivement lorsque la valeur Tc courante de la température T diminue, jusqu'à atteindre la valeur T₃ haute de température T, à un troisième temps t₃. Cette diminution est, selon le mode de réalisation illustré, linéaire.

Selon le mode de réalisation représenté, le premier temps t₁ est antérieur au deuxième temps t₂, le deuxième temps t₂ est antérieur au troisième temps t₃ et le troisième temps t₃ est antérieur au quatrième temps t₄.

De préférence, avant que la valeur Tc courante de la température T n'ait atteint un maximum T_{M}, le pourcentage du travail W imposé à la deuxième motorisation 130 atteint un palier Wp qui persiste après un début de diminution de la valeur Tc courante de la température T depuis le maximum T_{M}.

Dans d'autres modes de réalisation, une répartition différente des couples fournis par la motorisation 110 électrique et la deuxième motorisation 130 peut primer sur le procédé 1000 de contrôle présenté dans ce texte. De telles répartitions peuvent, par exemple, être utilisées pour des raisons de stabilité du véhicule 1 automobile, lors du fonctionnement du correcteur électronique de trajectoire (ESP), ou encore pour répondre à un mode de conduite en quatre roues motrices.

Selon le mode de réalisation représenté, la motorisation 110 électrique est découplée de ladite au moins une roue 210 arrière au cours d'une étape du procédé 1000 de contrôle.

Dans le mode de réalisation illustré, le véhicule 1 automobile la deuxième motorisation 130 comprend une deuxième motorisation 130a électrique et un moteur 130b thermique.

Dans un mode de réalisation différent, la deuxième motorisation 130 comprend uniquement la deuxième motorisation 130a électrique ou le moteur 130b thermique.

Dans le mode de réalisation représenté, la deuxième motorisation 130a électrique comprend une deuxième machine 131a électrique couplée, par le biais du deuxième dispositif 140 de couplage, à ladite au moins une des roues 220 arrière et un deuxième onduleur 132a connectant la deuxième motorisation 130a électrique au convertisseur 300.

La batterie 150 de traction est, de préférence, connectée à la deuxième motorisation 130a électrique. La batterie 150 de traction est apte à être rechargée par le biais de la deuxième machine 131a électrique. La batterie 150 de traction est apte à alimenter la deuxième machine 131a électrique.

Le véhicule 1 automobile comprend un moyen 130c de liaison du moteur 130b thermique et de la deuxième motorisation 130a électrique couplant le moteur 130b thermique à ladite au moins une roue 220 avant.

Selon le mode de réalisation représenté, le véhicule 1 automobile comprend également un alternateur 160 reliant le moteur 130b thermique et le réseau 410 électrique et pouvant assurer l'alimentation, en énergie électrique, du réseau 410 électrique.

L'alternateur 160 est, de préférence, apte à démarrer le moteur 130b thermique du véhicule 1 automobile.

## Revendications

1. Procédé (1000) de contrôle d'une température (T) d'un convertisseur (300) de puissance d'un véhicule (1) automobile, le convertisseur (300) connectant un réseau (410) électrique et un premier onduleur (112) d'une motorisation (110) électrique du véhicule (1) automobile, la motorisation (110) électrique étant couplée, par le biais d'un premier dispositif (120) de couplage, à au moins une des roues (210,220) du véhicule (1) automobile de sorte à mouvoir le véhicule (1) automobile, le véhicule (1) automobile comprenant un système (500) de refroidissement d'une pluralité d'éléments parmi lesquels le convertisseur (300) et le premier onduleur (112), le procédé (1000) de contrôle comprenant une comparaison (1002) d'une valeur (Tc) courante d'une température (T) d'un des éléments de la pluralité d'éléments refroidis par le système (500) de refroidissement avec une valeur (T₁,T₂) seuil, et, lorsque la valeur (Tc) courante de la température (T) est supérieure à la valeur (T₁,T₂) seuil, une diminution (1003) d'un travail de la motorisation (110) électrique mouvant le véhicule (1) automobile compensée (1004) par un travail (W) d'une deuxième motorisation (130) mouvant le véhicule (1) automobile, le procédé (1000) de contrôle étant **caractérisé en ce que** la compensation (1004) de la diminution de travail comprend un couplage (F_{F}) forcé d'un deuxième dispositif (140) de couplage de la deuxième motorisation (130) à au moins une des roues (210,220) du véhicule (1) automobile.

2. Procédé (1000) de contrôle selon la revendication précédente, **caractérisé en ce que** la température (T) relevée est celle du convertisseur (300).

3. Procédé (1000) de contrôle selon l'une quelconque des revendications précédentes, **caractérisé en ce que**, lors de la diminution (1003) du travail de la motorisation (110) électrique, la motorisation (110) électrique est découplée de ladite au moins une des roues (210,220) du véhicule (1) automobile.

4. Procédé (1000) de contrôle selon l'une quelconque des revendications précédentes, **caractérisé en ce que** la valeur (T₁,T₂) seuil est segmentée en :
- une valeur (T₂) seuil d'augmentation, à partir de laquelle, lorsque la valeur (Tc) courante de la température (T) relevée augmente, le couplage du deuxième dispositif (140) de couplage de la deuxième motorisation (130) à ladite au moins une des roues (210,220) du véhicule (1) automobile est forcée,
- une valeur (T₁) seuil de diminution, inférieure à la valeur (T₂) seuil d'augmentation, à partir de laquelle, lorsque la valeur (Tc) courante de la température (T) relevée diminue, le forçage du couplage du deuxième dispositif (140) de couplage de la deuxième motorisation (130) à ladite au moins une des roues (210,220) du véhicule (1) automobile est interrompu.

5. Procédé (1000) de contrôle selon l'une quelconque des revendications précédentes, **caractérisé en ce que**, lorsque la valeur (Tc) courante de la température (T) augmente, le pourcentage du travail (W) imposé à la deuxième motorisation (130), par rapport à un travail maximal réalisable par cette deuxième motorisation (130), augmente progressivement.

6. Procédé (1000) de contrôle selon l'une quelconque des revendications précédentes, **caractérisé en ce que**, lorsque la valeur (Tc) courante de la température (T) diminue, le pourcentage du travail (W) imposé à la deuxième motorisation (130), par rapport à un travail maximal réalisable par cette deuxième motorisation (130), diminue progressivement.

7. Procédé (1000) de contrôle selon l'une quelconque des revendications précédentes, **caractérisé en ce que**, avant que la valeur (Tc) courante de la température (T) n'atteigne un maximum (T_{M}), lorsque la valeur (Tc) courante de la température (T) augmente, le pourcentage du travail (W) imposé à la deuxième motorisation (130), par rapport à un travail maximal réalisable par cette deuxième motorisation (130), atteint un palier (Wp) qui persiste après une diminution de la valeur (Tc) courante de la température (T) depuis le maximum (T_{M}).

8. Véhicule (1) automobile comprenant :
- un convertisseur (300) ;
- un réseau (410) électrique connecté au convertisseur (300) ;
- une motorisation (110) électrique munie d'un premier onduleur (112), le premier onduleur (112) étant connecté au réseau (410) électrique par le biais du convertisseur (300) ;
- un système (500) de refroidissement d'une pluralité d'éléments parmi lesquels le convertisseur (300) et le premier onduleur (112) ;
- un capteur de température (T) d'un des éléments de la pluralité d'éléments refroidis par le système (500) de refroidissement ;
- un premier dispositif (120) de couplage d'au moins une des roues (210,220) du véhicule (1) automobile et de la motorisation (110) électrique ;
- une deuxième motorisation (130) ;
- un deuxième dispositif (140) de couplage d'au moins une des roues (210,220) du véhicule (1) automobile et de la deuxième motorisation (130) ;
le véhicule (1) automobile étant **caractérisé en ce qu'**il comporte un moyen de mise en oeuvre d'un procédé (1000) de contrôle selon l'une quelconque des revendications précédentes.

9. Véhicule (1) automobile selon la revendication précédente, **caractérisé en ce que** la deuxième motorisation (130) comprend une deuxième machine (131a) électrique.

10. Véhicule (1) automobile selon l'une quelconque des revendications 8 et 9, **caractérisé en ce que** la deuxième motorisation (130) comprend un moteur (130b) thermique.

## Patentansprüche

1. Steuerverfahren (1000) zum Steuern einer Temperatur (T) eines Stromrichters (300) eines Kraftfahrzeugs (1), wobei der Stromrichter (300) ein elektrisches Netz (410) und einen ersten Wechselrichter (112) eines Elektromotors verbindet (110) des Kraftfahrzeugs (1), wobei der Elektromotor (110) über eine erste Kopplungseinrichtung (120) mit mindestens einem der Räder (210,220) des Kraftfahrzeugs (1) zur Bewegung gekoppelt ist Kraftfahrzeug (1), wobei das Kraftfahrzeug (1) ein System (500) zum Kühlen mehrerer Elemente umfasst, das den Umrichter (300) und den ersten Wechselrichter (112) umfasst, wobei das Steuerverfahren (1000) einen Vergleich (1002) umfasst. eines aktuellen Werts (Tc) einer Temperatur (T) eines der durch das Kühlsystem (500) gekühlten Elemente der Vielzahl von Elementen mit einem Schwellenwert (T₁, T₂) und, wenn der aktuelle Wert (Tc) der Temperatur (T) größer als der Schwellenwert (T₁,₂) ist, wird eine Reduzierung (1003) der Arbeit des das Fahrzeug Automobil (1) bewegenden Elektromotors (110) durch die Arbeit (W) von a kompensiert (1004). zweiten Motor (130), der das Kraftfahrzeug (1) antreibt, wobei das Steuerverfahren (1000) **dadurch gekennzeichnet ist, dass** die Kompensation (1004) der Untersetzungsarbeit eine Zwangskopplung (F_{F}) einer zweiten Vorrichtung (140) zur Kopplung der zweiten umfasst Motorisierung (130) an mindestens einem der Räder (210,220) des Kraftfahrzeugs (1).

2. Steuerverfahren (1000) nach dem vorhergehenden Anspruch, **dadurch gekennzeichnet, dass** die erfasste Temperatur (T) die des Konverters (300) ist.

3. Steuerverfahren (1000) nach einem der vorhergehenden Ansprüche, **dadurch gekennzeichnet, dass** während der Reduzierung (1003) der Arbeit des Elektromotors (110) der Elektromotor (110) von dem mindestens einen Rad abgekoppelt wird (210 220) des Kraftfahrzeugs (1).

4. Steuerverfahren (1000) nach einem der vorangehenden Ansprüche, **dadurch gekennzeichnet, dass** der Schwellenwert (T₁,T₂) segmentiert ist in:
- einen Erhöhungsschwellenwert (T₂), von dem aus, wenn der Wert (Tc) der aktuellen Temperatur entspricht (T) zunimmt, wird die Kopplung der zweiten Vorrichtung (140) zur Kopplung der zweiten Motorisierung (130) mit dem mindestens einen der Räder (210,220) des Kraftfahrzeugs (1) erzwungen,
- um einen Wert (T₁) zu verringern Schwelle, die unter dem Wert (T₂) liegt. Anstiegsschwelle, ab der, wenn der aktuelle Wert (Tc) der erfassten Temperatur (T) abnimmt, die Zwangskopplung der zweiten Vorrichtung (140) mit der Kopplung des zweiten Motors (130) verbunden wird) zu mindestens einem der Räder (210,220) des Kraftfahrzeugs (1) unterbrochen ist.

5. Steuerverfahren (1000) nach einem der vorhergehenden Ansprüche, **dadurch gekennzeichnet, dass**, wenn der aktuelle Wert (Tc) der Temperatur (T) ansteigt, der Prozentsatz der Arbeit (W), die der zweiten Motorisierung (130) auferlegt wird, relativ zunimmt bis zu einer mit dieser zweiten Motorisierung (130) maximal erreichbaren Arbeit, schrittweise erhöht.

6. Steuerverfahren (1000) nach einem der vorhergehenden Ansprüche, **dadurch gekennzeichnet, dass**, wenn der aktuelle Wert (Tc) der Temperatur (T) abnimmt, der Prozentsatz der Arbeit (W), die dem zweiten Motor (130) auferlegt wird, verglichen wird bis zu einer mit dieser zweiten Motorisierung (130) maximal erreichbaren Arbeit, allmählich abnimmt.

7. Steuerverfahren (1000) nach einem der vorhergehenden Ansprüche, **dadurch gekennzeichnet, dass**, bevor der aktuelle Wert (Tc) der Temperatur (T) ein Maximum (T_{M}) erreicht, wenn der aktuelle Wert (Tc) der Temperatur (T) zunimmt, erreicht der Prozentsatz der der zweiten Motorisierung (130) auferlegten Arbeit (W) im Vergleich zu einer von dieser zweiten Motorisierung (130) erreichbaren Maximalarbeit ein Niveau (Wp), das nach einer Reduzierung des aktuellen Werts bestehen bleibt (Tc) der Temperatur (T) vom Maximum (T_{M}).

8. Kraftfahrzeug (1) umfassend:
- einen Konverter (300);
- ein elektrisches Netzwerk (410), das mit dem Konverter (300) verbunden ist;
- einen Elektromotor (110), der mit einem ersten Wechselrichter (112) ausgestattet ist, wobei der erste Wechselrichter (112) über den Umrichter (300) mit dem elektrischen Netz (410) verbunden ist;
- ein System (500) zum Kühlen mehrerer Elemente, einschließlich des Konverters (300) und des ersten Wechselrichters (112);
- einen Temperatursensor (T) eines der mehreren Elemente, die durch das Kühlsystem (500) gekühlt werden;
- eine erste Vorrichtung (120) zum Koppeln mindestens eines der Räder (210,220) des Kraftfahrzeugs (1) und des Elektromotors (110);
- eine zweite Motorisierung (130);
- eine zweite Vorrichtung (140) zum Koppeln mindestens eines der Räder (210,220) des Kraftfahrzeugs (1) und des zweiten Motors (130);
wobei das Kraftfahrzeug (1) **dadurch gekennzeichnet ist, dass** es Mittel zur Umsetzung eines Steuerverfahrens (1000) nach einem der vorhergehenden Ansprüche umfasst.

9. Kraftfahrzeug (1) nach dem vorhergehenden Anspruch, **dadurch gekennzeichnet, dass** der zweite Motor (130) eine zweite elektrische Maschine (131a) umfasst.

10. Kraftfahrzeug (1) nach einem der Ansprüche 8 und 9, **dadurch gekennzeichnet, dass** der zweite Motor (130) einen Wärmemotor (130b) umfasst.

## Claims

1. Method (1000) for controlling a temperature (T) of a power converter (300) of an automobile vehicle (1), the converter (300) connecting an electrical network (410) and a first inverter (112) of an electric motor (110) of the automobile vehicle (1), the electric motor (110) being coupled, via a first coupling device (120), to at least one of the wheels (210,220) of the vehicle (1) automobile so as to move the automobile vehicle (1), the automobile vehicle (1) comprising a system (500) for cooling a plurality of elements including the converter (300) and the first inverter (112), the control method (1000) comprising a comparison (1002) of a current value (Tc) of a temperature (T) of one of the elements of the plurality of elements cooled by the cooling system (500) with a value (T₁,T₂) threshold, and, when the current value (Tc) of the temperature (T) is greater than the value (T₁,T₂) threshold, a reduction (1003) of a work of the motorization (110) electric moving the automobile vehicle (1) compensated (1004) by a work (W) of a second motor (130) moving the automobile vehicle (1), the control method (1000) being **characterized in that** the compensation (1004 ) of the reduction in work comprises a forced coupling (F_{F}) of a second device (140) for coupling the second motorization (130) to at least one of the wheels (210,220) of the automobile vehicle (1).

2. Control method (1000) according to the preceding claim, **characterized in that** the temperature (T) recorded is that of the converter (300).

3. Control method (1000) according to any one of the preceding claims, **characterized in that**, during the reduction (1003) of the work of the electric motor (110), the electric motor (110) is decoupled from said at least one wheels (210,220) of the automobile vehicle (1).

4. Control method (1000) according to any one of the preceding claims, **characterized in that** the threshold value (T₁,T₂) is segmented into:
- an increase threshold value (T₂), from which, when the value (Tc) current of the temperature (T) measured increases, the coupling of the second device (140) for coupling the second motorization (130) to said at least one of the wheels (210,220) of the automobile vehicle (1) is forced,
- a value (T₁) reduction threshold, lower than the value (T₂) increase threshold, from which, when the current value (Tc) of the temperature (T) recorded decreases, the forcing of the coupling of the second device (140) coupling of the second motor (130) to said at least one of the wheels (210,220) of the motor vehicle (1) is interrupted.

5. Control method (1000) according to any one of the preceding claims, **characterized in that**, when the current value (Tc) of the temperature (T) increases, the percentage of work (W) imposed on the second motorization (130), relative to a maximum work achievable by this second motorization (130), gradually increases.

6. Control method (1000) according to any one of the preceding claims, **characterized in that**, when the current value (Tc) of the temperature (T) decreases, the percentage of work (W) imposed on the second motorization (130), compared to a maximum work achievable by this second motorization (130), gradually decreases.

7. Control method (1000) according to any one of the preceding claims, **characterized in that**, before the current value (Tc) of the temperature (T) reaches a maximum (T_{M}), when the current value (Tc) of the temperature (T) increases, the percentage of the work (W) imposed on the second motorization (130), compared to a maximum work achievable by this second motorization (130), reaches a level (Wp) which persists after a reduction of the current value (Tc) of the temperature (T) from the maximum (T_{M}).

8. Motor vehicle (1) comprising:
- a converter (300);
- an electrical network (410) connected to the converter (300);
- an electric motor (110) provided with a first inverter (112), the first inverter (112) being connected to the electrical network (410) via the converter (300);
- a system (500) for cooling a plurality of elements including the converter (300) and the first inverter (112);
- a temperature sensor (T) of one of the plurality of elements cooled by the cooling system (500);
- a first device (120) for coupling at least one of the wheels (210,220) of the automobile vehicle (1) and the electric motor (110);
- a second motorization (130);
- a second device (140) for coupling at least one of the wheels (210,220) of the automobile vehicle (1) and the second engine (130);
the motor vehicle (1) being **characterized in that** it comprises means for implementing a control method (1000) according to any one of the preceding claims.

9. Motor vehicle (1) according to the preceding claim, **characterized in that** the second engine (130) comprises a second electric machine (131a).

10. Motor vehicle (1) according to any one of claims 8 and 9, **characterized in that** the second engine (130) comprises a thermal engine (130b).
